# EUROPÄISCHE PATENTANMELDUNG

(11) **EP 4 599 914 A1**
(43) Veröffentlichungstag der Anmeldung: **13.08.2025**
(21) Anmeldenummer: 24219037.9
(22) Anmeldetag: 11.12.2024
(51) Int. Cl.: B01D 46/00, B01D 46/10

(54) **FILTERVORRICHTUNG**

(30) Priorität: 18.01.2024 DE 202024100246 U
(71) Anmelder: Microair Sp.z.o.o., 58-100 Swidnica (PL)
(72) Erfinder: MÜLLER, Stefan, 45739 Oer-Erkenschwick (DE)
(74) Vertreter: Patentanwälte Dr. Keller, Schwertfeger Partnerschaft mbB

(57) **Zusammenfassung**

Die vorliegende Erfindung betrifft eine Filtervorrichtung geeignet für den Einsatz in Fahrzeugen umfassend einen Filter (20) mit einem Filtermedium (22) und einer Halterung (24), wobei das Filtermedium (22) in der Halterung (24) befestigt ist, und ein Bauteil, wobei die Halterung (24) an dem Bauteil befestigt und gegenüber dem Bauteil beweglich gelagert ist, wobei das Bauteil verlagerbar ist und wenigstens ein Anschlag (40) vorgesehen ist, der mit der Halterung (24) wechselwirkt.

## Beschreibung

Die vorliegende Erfindung betrifft eine Filtervorrichtung geeignet für den Einsatz in Fahrzeugen.

Insbesondere bei Fahrzeugen wie etwa Baumaschinen und Offroad-Fahrzeugen, die sich in staubbeladener oder mit Schadstoffen belasteter Umgebung bewegen, ist es zum Schutz des Fahrers und der Fahrgäste notwendig, dass die Frischluft, welche in die Fahrzeugkabine bzw. in den Fahrzeuginnenraum geführt wird, vorher entsprechend gefiltert wird.

Aus diesem Grund befinden sich insbesondere bei Fahrzeugen, die im Offroad-Bereich verwendet werden, entsprechende Filtervorrichtungen, um die in die Fahrzeugkabine oder in den Fahrzeuginnenraum strömende Frischluft zu reinigen. Je nach Einsatzbereich und Umgebungsbedingungen werden hierbei Filter unterschiedlicher Klassen und Normen eingesetzt, um die in den Fahrgastraum bzw. in die Fahrerkabine einströmende Frischluft zu reinigen.

Unabhängig von den äußeren Umgebungsbedingungen und der gewählten Filterklasse besteht bei allen Filtersystemen das Problem, dass diese sich während des Betriebs der entsprechenden Fahrzeuge im Laufe der Zeit mit Partikeln, insbesondere Staubpartikeln bzw. Schadstoffen zusetzen und ihre Funktion verlieren. Die Folge ist, dass die Filter entsprechend ausgetauscht bzw. gereinigt werden müssen. Ein Austausch eines Filters führt zu unerwünschten Wartungszeiten und somit Standzeiten des Fahrzeugs. Darüber hinaus fallen zusätzliche Kosten für den Kauf eines neuen, unbenutzten Filters an. Wird anstelle eines neuen unbenutzten Filters der vorhandene Filter gereinigt, ist dies in der Regel mit zusätzlichem Personal- und Kostenaufwand verbunden. Insbesondere bei Filtern mit hoher Filterklasse ist eine Reinigung häufig auch noch mit dem Risiko verbunden, dass das feine Filtermedium beschädigt oder sogar zerstört wird.

Es besteht somit der Wunsch nach Filtervorrichtungen für den Einsatz in Fahrzeugen, bei denen der Filter, insbesondere das Filtermedium, eine im Vergleich zu bekannten Filtervorrichtungen erhöhte Standzeit bei vergleichbaren Umgebungsbedingungen aufweist.

Es ist daher Aufgabe der vorliegenden Erfindung, eine Filtervorrichtung geeignet für den Einsatz in Fahrzeugen bereitzustellen, die eine im Vergleich zu bekannten Filtervorrichtungen längere Standzeit zwischen zwei Wartungen hat.

Erfindungsgemäß wird die Aufgabe mit einer Filtervorrichtung gemäß Anspruch 1 gelöst. Insbesondere umfasst die Filtervorrichtung, die für den Einsatz in Fahrzeugen geeignet ist, einen Filter mit einem Filtermedium und einer Halterung, wobei das Filtermedium in der Halterung befestigt ist, und ein verlagerbares Bauteil, wobei die Halterung an dem Bauteil befestigt und gegenüber dem Bauteil beweglich gelagert ist, wobei wenigstens ein Anschlag vorgesehen ist, der mit der Halterung wechselwirkt.

Unter dem Begriff Fahrzeuge werden hier sowohl Straßenfahrzeuge, Baumaschinen, Geländefahrzeuge, Landmaschinen als auch mobile Arbeitsmaschinen verstanden. Vorzugsweise werden die Fahrzeuge auf Baustellen und/oder in schwierigem Gelände eingesetzt.

Es wurde festgestellt, dass ein Selbstreinigungseffekt eines mit Partikeln, insbesondere Staubpartikeln oder Schadstoff beladenen Filtermediums bereits dann eintritt, wenn die Halterung, in dem sich das Filtermedium befindet, an einem Bauteil befestigt und dabei beweglich gegenüber dem Bauteil gelagert ist, so dass eine Relativbewegung zwischen der Halterung des Filtermediums und dem Bauteil und dadurch eine Relativbewegung zwischen dem Filtermedium und dem Bauteil möglich ist. Allein die Relativbewegung zwischen Halterung und Bauteil sorgt dafür, dass im Filtermedium enthaltene Partikel aus dem Filtermedium herausgelangen, insbesondere nach unten herausfallen. Gemäß der Erfindung wird der Reinigungseffekt verstärkt, wenn die Halterung mit einem Anschlag wechselwirkt. Der Anschlag sorgt somit nicht nur dafür, dass die Auslenkung der Halterung begrenzt ist, so dass sich beispielsweise die Halterung während der Bewegung nicht versehentlich von Bauteil löst. Der Anschlag führt vor allem dazu, dass das Filtermedium erschüttert wird, wenn die Halterung an den Anschlag anschlägt. Die Erschütterung des Filtermediums bewirkt, dass Partikel wie etwa Staubpartikel aus dem Filtermedium abgeklopft werden.

Die sich von dem verlagerbaren Bauteil unterscheidende Bewegung des Filtermediums wird somit genutzt, um das Filtermedium zu bewegen und an einem Anschlag anstoßen zu lassen, so dass sich die im Filter gesammelten Partikel herauslösen.

Die Relativbewegung zwischen der Halterung und dem Bauteil kann auf verschiedene Arten ausgelöst werden. Erfindungsgemäß wird die Relativbewegung dadurch ausgelöst, dass das Bauteil bewegt wird. Das Bauteil ist somit verlagerbar. Wird das Bauteil beispielsweise aus dem Ruhezustand in Bewegung versetzt, verlagert sich die Halterung mit dem Filtermedium aufgrund der Trägheit zeitversetzt, so dass eine Relativbewegung zwischen der Halterung und dem Bauteil entsteht. Es versteht sich, dass eine Relativbewegung auch dann entsteht, wenn sich die Geschwindigkeit des Bauteils verändert oder Richtungsänderungen vorgenommen werden.

Fahrzeuge wie etwa Baumaschinen oder Offroad-Fahrzeugen werden häufig in staubiger, insbesondere belasteter Umgebung eingesetzt. Bei diesen Fahrzeugen ist daher mit einem häufigen Filterwechsel einer eingebauten Filtervorrichtung zu rechnen. Diese Fahrzeuge bewegen sich in vielen Fällen auf schwierigem Gelände, so dass die Fahrzeuge oft Stößen ausgesetzt sind und/oder während der Fahrt häufig Geschwindigkeits- oder Bewegungsrichtungsänderungen erfolgen. Die wechselnden Bewegungen des Fahrzeugs auf schwierigem Gelände können genutzt werden, um die Halterung in Bewegung zu versetzen.

Es wurde nämlich festgestellt, dass oben genannter Selbstreinigungseffekt eines mit Staub oder Schadstoff beladenen Filtermediums dann eintritt, wenn bewusst eine Relativbewegung zwischen zumindest einem Teil der Halterung des Filtermediums bzw. dem Filtermedium selbst und einem vorzugsweise starr mit einem Fahrzeug verbundenem Bauteil besteht.

Bei einer bevorzugten Ausführungsform ist das Bauteil Teil eines Fahrzeugs, wobei das Bauteil vorzugsweise fest mit der Karosserie des Fahrzeugs verbunden ist. Alternativ kann das Bauteil ein separates Gebilde sein, welches starr mit dem Fahrzeug, insbesondere starr mit der Karosserie des Fahrzeugs verbunden ist.

Die Relativbewegung zwischen Halterung und Bauteil kann bei dieser Ausführungsform dadurch ausgelöst werden, indem das Fahrzeug bewegt wird, insbesondere diskontinuierlich bewegt wird. Dies kann beispielsweise einfach während des bestimmungsgemäßen Betriebs des Fahrzeugs erfolgen. Die Halterung wird mittels des Fahrzeugs zu einer Bewegung angeregt, wobei die Bewegung aufgrund des Vorsehens eines Anschlags in der Bewegungsrichtung begrenzt ist.

Wird beispielsweise ein Fahrzeug in Bewegung versetzt, bewegt sich das mit dem Fahrzeug verbundene Bauteil. Das Bauteil ist somit verlagerbar. Vorteilhafterweise ist das Bauteil starr mit dem Fahrzeug verbunden, so dass die Bewegung des Fahrzeugs direkt auf das verlagerbare Bauteil übertragen wird. Da die Halterung beispielsweise mittels einer beweglichen Verbindungsvorrichtung mit dem verlagerbaren Bauteil beweglich verbunden ist, bewirkt die Trägheit, dass die Halterung eine andere Bewegung ausführt als das verlagerbare Bauteil, nachdem das verlagerbare Bauteil Bewegungsänderungen in Form von Richtungs- und Geschwindigkeitsänderungen durchgeführt hat. Da das Filtermedium des Filters wiederum fest mit der Halterung verbunden ist, wird die Bewegung der Halterung auf das Filtermedium übertragen und das Filtermedium wird erschüttert, wenn die Halterung an den Anschlag anstößt.

Bei einem sich ungleichmäßig bewegenden, verlagerbaren Bauteil eines Fahrzeugs ist es bei dieser Filtervorrichtung somit nicht notwendig, zusätzliche Energiequellen vorzusehen, um den Filter selbst in Bewegung, insbesondere in Schwingung oder Drehbewegungen zu versetzen.

Der Anschlag ist vorzugsweise an dem verlagerbaren Bauteil oder einem mit dem verlagerbaren Bauteil fest verbundenen zusätzlichen Bauteil befestigt.

Es hat sich als vorteilhaft erwiesen, dass die Halterung ein starrer, vorzugsweise rechteckiger Rahmen ist, da hier die auf den starren Rahmen wirkenden Kräfte und somit die auf den Rahmen wirkende Erschütterungen im Wesentlichen direkt auf das Filtermedium übertragen werden.

Bei einer bevorzugten Ausführungsform ist wenigstens eine Verbindungsvorrichtung vorgesehen und an dem verlagerbaren Bauteil befindet sich wenigstens eine Befestigungsstelle, wobei die wenigstens eine Verbindungsvorrichtung die Halterung des Filters an der Befestigungsstelle mit dem verlagerbaren Bauteil beweglich verbindet.

Es ist von Vorteil, dass zur Ausführung einer Relativbewegung die Halterung mit Abstand von dem Bauteil an diesem befestigt ist. Die Verbindungsvorrichtung kann beispielsweise als Abstandshalter dienen.

Vorzugsweise ist die Verbindungsvorrichtung beweglich. Es handelt sich hier speziell um eine bewegliche Verbindungsvorrichtung. Insbesondere ist es bevorzugt, dass die Verbindungsvorrichtung ein Lager, insbesondere ein reibungsarmes Lager umfasst. Mit Hilfe des Lagers lässt sich die Verlagerung der Halterung gegenüber dem verlagerbaren Bauteil technisch einfach realisieren. Je geringer die Reibung des Lagers ist, desto zeitlich länger können sich die Bewegungen des verlagerbaren Bauteils und der Halterung unterscheiden, so dass ein möglichst langer Zeitraum zur Verfügung besteht, um das Filtermedium zu reinigen, insbesondere abzuklopfen.

Insbesondere umfasst die Filtervorrichtung, die für den Einsatz in Fahrzeugen geeignet ist, einen Filter mit einem Filtermedium und einer rahmenartigen Halterung, wobei das Filtermedium in der Halterung befestigt ist, ein verlagerbares Bauteil, an dem sich eine Befestigungsstelle befindet und eine bewegliche Verbindungsvorrichtung, die die Halterung des Filters an der Befestigungsstelle mit dem verlagerbaren Bauteil verbindet, wobei die Halterung mittels der beweglichen Verbindungsvorrichtung gegenüber dem verlagerbaren Bauteil beweglich ist.

Bei einer bevorzugten Ausführungsform ist nur eine Befestigungsstelle vorgesehen, so dass die Halterung gegenüber dem Bauteil schwingen, insbesondere pendeln kann. Die Halterung bildet zusammen mit dem Bauteil ein Pendel. Die Pendelbewegung kann wie bei einem Federpendel entlang einer Raumrichtung oder wie bei einem physikalischen Pendel in mehrere Raumrichtungen erfolgen.

Hierbei kann die Halterung in Sinne eines Federpendels horizontal oder vertikal schwingend bzw. insbesondere horizontal oder vertikal pendelnd gelagert sein Um eine solche horizontale oder vertikale Bewegung der Halterung zu realisieren, kann beispielsweise die Verbindungsvorrichtung ein Federelement, insbesondere ein Gummi-Metall Puffer und/oder eine Linearführung umfassen. Bei diesen Ausführungsformen schwingt die Halterung in horizontaler oder vertikaler Richtung, wobei die Halterung bei entsprechender Auslenkung der Halterung gegenüber dem Bauteil an den Anschlag schlägt, so dass das Filterelement abgeklopft werden kann.

Zusätzlich oder alternativ kann die Halterung drehbar gelagert sein, wobei die Verbindungsvorrichtung zwischen Bauteil und Halterung vorzugsweise ein Drehgelenk aufweist.

Bei dieser Ausführungsform bewegt sich die Halterung bzw. das Filterelement entlang einer Kreisbahn, insbesondere pendelt entlang einer Kreisbahn.

Bei einer alternativen Ausführungsform sind zwei Befestigungsstellen vorgesehen, wobei die Verbindungsvorrichtung so ausgebildet ist, dass die Halterung schwingen kann.

Vorzugsweise handelt es sich bei allen von der Halterung durchführbaren Schwingungen um harmonische Schwingungen, bei denen die Halterung nach einer Auslenkung aus dem Ruhezustand wieder in den Ruhezustand zurückkehrt.

Wenn die Halterung im Rahmen der Erfindung aufgrund verschiedener Bewegungsänderungen des Bauteils immer wieder erneut in Bewegung, insbesondere in Schwingung versetzt werden kann, handelt es sich bei der Schwingung der Halterung um eine freie Schwingung der Halterung und nicht um eine erzwungene Schwingung.

Um zu verhindern, dass der Filter bereits bei kleinsten Bewegungsänderungen des verlagerbaren Bauteils in Schwingungen oder Pendelbewegungen versetzt wird, ist es von Vorteil, dass die Verbindungsvorrichtung ein Dämpfungselement, insbesondere eine Dämpfungsfeder aufweist.

Weiterhin ist es von Vorteil, dass eine zusätzliche Masse an der Halterung befestigt ist. Diese kann dazu dienen, die auf einen Anschlag wirkende Kraft zu erhöhen, um das Filtermedium effektiver von Partikel- oder Schadstoffbeladung zu befreien.

Die Verbindungsvorrichtung kann ein Verbindungsteil und ein Befestigungselement umfassen. Das Befestigungselement kann ein separates Bauteil sein oder einstückig mit dem verlagerbaren Bauteil ausgebildet sein. In dem Verbindungsteil sind vorzugsweise bewegliche Teile vorgesehen, die eine Relativbewegung zwischen dem verlagerbaren Bauteil und der Halterung bewirken. Das Verbindungsteil und das Befestigungselement können als verschiedene Bauteile oder einstückig ausgebildet sein.

Bei einer bevorzugten Ausführungsform weist das verlagerbare Bauteil ein Gehäuse auf, wobei die Befestigungsstelle an dem Gehäuse vorgesehen ist und das Gehäuse die Halterung mit dem darin eingespannten Filtermedium mit Abstand umgibt. Der Abstand zwischen dem Gehäuse und der Halterung ist hierbei so gewählt, dass der Filter in dem Gehäuse beweglich ist und eine räumlich begrenzte Schwing- und/oder Drehbewegung durchführen kann. In dem Gehäuse befindet sich der Anschlag, wobei der Anschlag als separates Teil oder als Teil des Gehäuses ausgebildet sein kann.

Das Gehäuse kann Teil einer verlagerbaren Vorrichtung, wie etwa einem Fahrzeug sein oder ein separates Teil sein, welches wiederum mit einer verlagerbaren Vorrichtung, wie etwa einem Fahrzeug verbunden, vorzugsweise fest verbunden ist. Das Gehäuse bietet zum einen einen zusätzlichen Schutz des Filters vor äußeren Einflüssen und zum anderen kann das Gehäuse auf einfache Weise Anschlagsflächen, gegen die zumindest ein Teil der Halterung bei Schwing- oder Pendelbewegungen schlägt, bereitstellen, um das Filtermedium abzuklopfen.

Um zu verhindern, dass zwischen Gehäuse und Halterung staub- oder schadstoffbeladene Frischluft in die Fahrerkabine gelangt, ist es notwendig, dass der Bereich zwischen Halterung und Gehäuse staubdicht ist. Vorzugsweise ist zwischen Halterung und Gehäuse eine flexible, staubdichte Dichtung, insbesondere ein flexibles staubdichtes Textilelement vorgesehen. Beispielsweise sind in Falten gelegte Textilelemente in der Lage, trotz Relativbewegungen zwischen dem Filter und dem Gehäuse eine staubdichte Abdichtung zwischen Filter und Gehäuse bereitzustellen.

Es hat sich als Vorteil erwiesen, dass das Filtermedium aus einem gewirkten Material gebildet ist, wobei sich insbesondere Filtermedien bewährt haben, die aus einem plissierten und/oder elastischen Material hergestellt sind.

Um die aus dem Filtermedium herausgeklopften Partikel, insbesondere Staubpartikel oder die herausgeklopften Schadstoffe zu sammeln, ist eine Aufnahmevorrichtung zur Aufnahme von Partikeln unterhalb des Filtermediums vorgesehen.

Die Filtervorrichtung ist vor allem für Filter in Form von Plattenfiltern geeignet, bei denen das Filtermedium rahmenartig von der Halterung umgeben ist. Der Filter der Filtervorrichtung kann jedoch auch eine andere Form, beispielsweise eine Schlauchform aufweisen, wobei die Halterung das Filtermedium nur abschnittsweise umgibt.

Gegenstand der vorliegenden Erfindung ist auch ein Fahrzeug, umfassend eine Filtervorrichtung nach einem der vorhergehenden Ansprüche. Vorzugsweise ist das verlagerbare Bauteil ein Teil der Karosserie des Fahrzeugs.

Alternativ kann das verlagerbare Bauteil ein separates Teil, wie etwa ein zusätzliches Gehäuse sein, welches wiederrum mit einem Fahrzeug oder einer mobilen Arbeitsmaschine fest im Sinne von starr verbunden werden kann.

Um Wartungsstillstände zur Reinigung des Filtermediums zu reduzieren, ist es von besonderem Vorteil, dass das Fahrzeug einen Betriebszustand aufweist, in dem das Fahrzeug bestimmungsgemäß betrieben wird und dass in dem Betriebszustand die Halterung gegenüber dem Bauteil beweglich ist. So kann die Reinigung des Filtermediums bereits während des bestimmungsgemäßen Betriebs des Fahrzeugs erfolgen.

Beispielsweise handelt es sich bei der Filtervorrichtung um einen Vorfilter, der zum Schutz einer Filteranlage eines Fahrzeugs vor dem Eingang zu der Filteranlage des Fahrzeugs angebracht ist. Mittels der Filtervorrichtung ist es möglich, die Standzeit von Filtern einer hohen Filterklasse in Umgebungen mit hoher Staubbelastung zu erhöhen.

Bevorzugte Ausführungsformen werden anhand der beigefügten Zeichnungen erläutert, in denen zeigen:
- Fig. 1: eine Baumaschine mit Kabinenzuluftfilter in Seitenansicht,
- Fig. 2: eine erste Ausführungsform einer Filtervorrichtung in einer Ansicht von vorne,
- Fig. 3: die in Fig. 2 dargestellte Ausführungsform in einer Ansicht von oben.

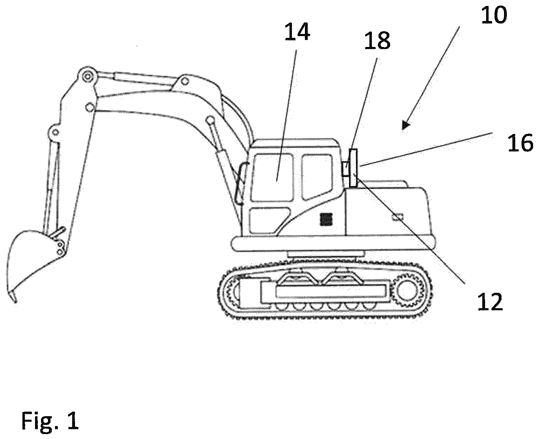

In Figur 1 ist eine Baumaschine 10 in Form eines Baggers mit einer Filtervorrichtung 12 zum Filtern der Luft, welche in die Fahrerkabine 14 strömt, gezeigt. Die Filtervorrichtung 12 umfasst ein starres, quaderförmiges Gehäuse 16, welches mittels einer Luftzuführung mit dem Innenraum der Fahrerkabine 14 verbunden ist, wobei das Gehäuse 16 starr mit der Baumaschine 10 verbunden ist.

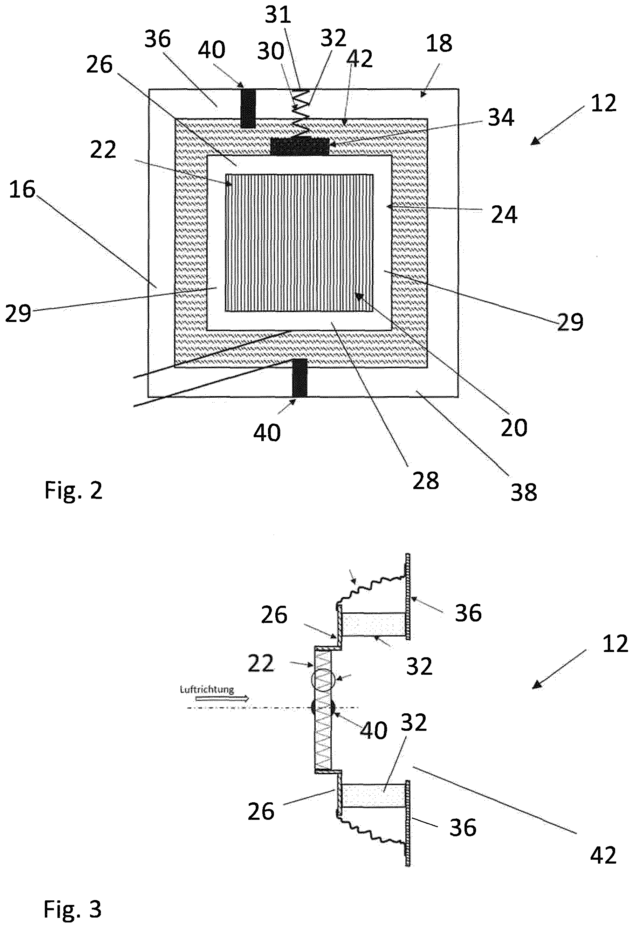

Figur 2 zeigt die Filtervorrichtung 12 in einer Ansicht von vorne, wobei hier im Detail ein Längsschnitt durch das Gehäuse 16 gezeigt ist. In Fig. 3 ist die Filtervorrichtung 12 in einer Ansicht von oben im Querschnitt gezeigt.

Das Gehäuse 16 ist quaderförmig ausgebildet und weist starre Gehäusewände 18 auf. Im Inneren des Gehäuses 16 befindet sich der Filter 20, wobei der Filter 20 als Plattenfilter ausgebildet ist und eine rahmenartige Halterung 24 sowie ein Filtermedium 22, welches in die rahmenartige Halterung 24 eingespannt ist, aufweist.

Bei dem Filtermedium 22 handelt es sich um ein Plissee, welches vertikal ausgerichtet ist.

Die Halterung 24 des Filters 20 weist ein oberes Rahmenelement 26 und ein entgegengesetzt liegendes unteres Rahmenelement 28 auf, sowie zwei seitliche Rahmenelemente 29. Alle Rahmenelemente 26, 28 und 29 sind starr ausgebildet und fest miteinander verbunden, so dass sich ein starrer rechteckiger Rahmen ergibt.

Weiterhin ist eine bewegliche Verbindungsvorrichtung 30 vorsehen, die die Halterung 24 mit dem Gehäuse 16 verbindet.

Das bewegliche Verbindungselement 30 ist hierbei an dem oberen Rahmenelement 26 befestigt. Zur Befestigung der beweglichen Verbindungsvorrichtung 30 an dem Gehäuse 16 ist eine Befestigungsstelle 31 an dem Gehäuse 16 vorgesehen.

Mittels der Verbindungsvorrichtung 30 ist der Filter 20 im Inneren des Gehäuses 16 mit Abstand von den Seitenwänden des Gehäuses 16 hängend gelagert.

Die Verbindungsvorrichtung 30 umfasst ein Verbindungsteil mit einem ersten Ende und einem zweiten Ende. An dem ersten Ende ist ein nicht dargestelltes Befestigungselement, das an der Befestigungsstelle 31 angreift, vorgesehen. An dem zweiten Ende befindet sich ein weiteres nicht dargestelltes Befestigungselement, das mit der Halterung 24 wechselwirkt.

Das Verbindungsteil umfasst eine Feder 32 und eine daran befestigte Schwungmasse 34. Die Feder 32 ist mittels des Befestigungselements mit dem Gehäuse 16 verbunden. Die Schwungmasse 34 ist fest mit dem oberen Rahmenelement 26 des Filters 20 verbunden.

Die Halterung 24 bildet zusammen mit dem Gehäuse 16 ein Federpendel aus, das eine freie, harmonische Schwingung ausführen kann.

Zwischen der Halterung 24 und dem Gehäuse 16 befindet sich ein staubdichtes, textiles und somit flexibles Element 42, das in Falten gelegt ist.

Sowohl an der Oberseite 36 als auch an der Unterseite 38 des Gehäuses 16 sind entsprechende Anschläge 40 oder Stopper vorgesehen.

Ändert die Baumaschine 10 ihre Geschwindigkeit oder Bewegung, so wird das fest mit der Baumaschine 10 verbundene Gehäuse 16 in der gleichen Geschwindigkeit und Richtung wie die Baumaschine 10 bewegt. Der Filter 20 im Inneren des Gehäuses 16, welcher hängend gelagert ist, wird aufgrund der Trägheit dieser Bewegung nicht folgen. Dies führt dazu, dass sich der gesamte Filter 20 im Inneren des Gehäuses 16 relativ zu dem Gehäuse 16 bewegt. Insbesondere bewegt sich der Filter 20 relativ zu dem Gehäuse 16 nach oben und unten, wobei die Bewegung des Filters 20 durch die Anschläge 40 begrenzt wird. Sobald der Filter 20 an dem oberen oder unteren Anschlag 40 schlägt, sorgt die Erschütterung dafür, dass sich die Partikel, insbesondere Staubpartikel, welche sich in dem Filtermedium 22 befinden, aus dem Filter 20 herausgeschlagen werden. Die aus dem Filter 20 herausgeklopften Partikel fallen nach unten auf die Unterseite 38 des Gehäuses 16. Dort kann eine Auffangwanne oder dergleichen vorgesehen sein.

Wie insbesondere in Figur 3 zu erkennen ist, weist das Gehäuse 16 eine Rückwand mit einer Öffnung 42 auf. Die Öffnung 42 steht über eine nicht dargestellte Leitung mit dem Innenraum der Fahrerkabine 14 in Verbindung. Da sich im Gegensatz zu fest eingebauten Filtern der Filter 20 gegenüber der Öffnung 42 bewegt, muss sichergestellt werden, dass die Abdichtung zwischen dem Gehäuse 16 und dem Filter 20 den Bewegungen des Filters 20 folgt. Dies wird dadurch erzielt, dass eine in Falten gelegte, flexible textile Dichtung in Form des textilen Elements 42 verwendet wird.

Anstelle des vertikal ausgerichteten plissierten Filtermediums kann auch ein horizontal ausgerichtetes plissiertes Filtermedium verwendet werden. Die Filterklasse kann in Abhängigkeit der gewünschten Anforderungen gewählt werden. Es versteht sich, dass auch andere textile Filtermedien 22, wie etwa gewirkte Filtermedien verwendet werden können.

Das in Fig. 2 und 3 dargestellte Federelement kann durch eine Linearführung ersetzt oder dadurch ergänzt werden.

Die Feder 32 kann dämpfend wirken, um zu verhindern, dass bereits kleinste Bewegungsänderungen der Baumaschine 10 auf den Filter 20 übertragen werden. Wenn auch nicht dargestellt, können zusätzliche Dämpfungselemente vorgesehen sein, um diesen Effekt zu bewirken.

Anstelle einer in vertikaler Richtung wirkenden Verbindungsvorrichtung kann auch eine in horizontaler Richtung wirkende Verbindungsvorrichtung vorgesehen sein.

Wenn auch nicht dargestellt, so kann die Verbindungsvorrichtung zusätzlich oder alternativ mit einem Drehgelenk ausgebildet sein, wodurch der Filter wie ein physikalisches Pendel auf einer Kreisbahn schwingt.

Bei einer nicht dargestellten Ausführungsform sind zwei Befestigungsstellen vorgesehen. Beispielsweise kann die Halterung an zwei entgegengesetzt liegenden Seiten mit einem bewegbaren Bauteil verbunden sein, wobei an jeder Befestigungsstelle eine Verbindungsvorrichtung vorgesehen ist, die eine Relativbewegung der Halterung gegenüber dem Bauteil ermöglicht. Insbesondere können die Verbindungsteile elastisch sein, so dass die Halterung um ihre Ruhestellung schwingen kann.

In der vorliegenden Ausführungsform ist die Halterung in einem eigenen Gehäuse der Filtervorrichtung befestigt, wobei das Gehäuse wiederum an einem Fahrzeug befestigt ist. Alternativ kann die die Halterung mit dem Filtermedium direkt an einem bewegbaren Bauteil wie etwa der Karosserie eines Fahrzeugs befestigt sein.

Vorzugsweise sind zwei Anschläge vorgesehen, so dass die Halterung bei einer Schwingung sowohl bei der Hin- als auch bei der Rückbewegung einen Stoß erleidet, so dass Partikel aus dem Filtermedium herausgeklopft werden können. Es können je nach Bauform der Halterung mehr oder weniger Anschläge vorgesehen sein.

Die vorliegende Ausführungsform wurde in Zusammenhang mit einem Plattenfilter beschrieben, der eine rechteckigen Rahmen als Halterung aufweist. Die Erfindung umfasst auch Filter, die keinen umlaufenden Rahmen als Halterung aufweisen, wie etwa ein Schlauchfilter, der beispielsweise an seiner Oberseite und Unterseite jeweils ein Rahmenelement aufweist. Auch der Plattenfilter kann einen Rahmen aufweisen, der nicht umlaufend ist.

Die Anschläge können fest mit dem Bauteil verbunden sein oder an einem von dem Bauteil verschiedenen Element befestigt sein.

Die dargestellten Ausführungsformen eignet sich vor allem bei Filtern, die als Vorfilter für Filter hoher Reinheitsklasse eingesetzt werden.

Im Rahmen der Erfindung werden auch nicht dargestellte Ausführungsformen umfasst, bei denen einzelne Merkmale weggelassen wurden oder bei denen Merkmale unterschiedlicher Ausführungsformen kombiniert wurden.

## Patentansprüche

1. Filtervorrichtung geeignet für den Einsatz in Fahrzeugen umfassend einen Filter (20) mit einem Filtermedium (22) und einer Halterung (24), wobei das Filtermedium (22) in der Halterung (24) befestigt ist, und ein Bauteil, wobei die Halterung (24) an dem Bauteil befestigt und gegenüber dem Bauteil beweglich gelagert ist, **dadurch gekennzeichnet, dass** das Bauteil verlagerbar ist und wenigstens ein Anschlag (40) vorgesehen ist, der mit der Halterung (24) wechselwirkt.

2. Filtervorrichtung nach Anspruch 1, **dadurch gekennzeichnet, dass** das Bauteil Teil des Fahrzeugs (10) ist oder ein separates Gebilde, welches starr mit dem Fahrzeug (10) verbunden ist.

3. Filtervorrichtung nach einem der vorhergehenden Ansprüche, **dadurch gekennzeichnet, dass** die Halterung (24) ein starrer Rahmen ist.

4. Filtervorrichtung nach einem der vorhergehenden Ansprüche, **dadurch gekennzeichnet, dass** sich an dem Bauteil eine Befestigungsstelle (31) befindet und dass eine bewegliche Verbindungsvorrichtung (30) vorgesehen ist, die die Halterung (24) des Filters (20) an der Befestigungsstelle (31) des Bauteils mit dem Bauteil beweglich verbindet,

5. Filtervorrichtung nach einem der vorhergehenden Ansprüche, **dadurch gekennzeichnet, dass** die Verbindungsvorrichtung (30) ein Lager, insbesondere ein reibungsarmes Lager umfasst.

6. Filtervorrichtung nach einem der vorhergehenden Ansprüche, **dadurch gekennzeichnet, dass** das Bauteil nur eine einzige Befestigungsstelle (31) aufweist, an der die Halterung (24) befestigt ist.

7. Filtervorrichtung nach einem der vorhergehenden Ansprüche, **dadurch gekennzeichnet, dass** die Halterung (24) horizontal oder vertikal schwingend gelagert ist.

8. Filtervorrichtung nach einem der vorhergehenden Ansprüche, **dadurch gekennzeichnet, dass** die Halterung drehbar gelagert ist.

9. Filtervorrichtung nach einem der vorhergehenden Ansprüche, **dadurch gekennzeichnet, dass** die Verbindungsvorrichtung ein Dämpfungselement, insbesondere eine Dämpfungsfeder aufweist.

10. Filtervorrichtung nach einem der vorhergehenden Ansprüche, **dadurch gekennzeichnet, dass** eine zusätzliche Masse (34) an der Halterung (24) befestigt ist.

11. Filtervorrichtung nach einem der vorhergehenden Ansprüche, **dadurch gekennzeichnet, dass** das Bauteil ein Gehäuse (16) aufweist, wobei die Befestigungsstelle (31) an dem Gehäuse (16) vorgesehen ist, wobei das Gehäuse (16) die Halterung (24) mit dem darin eingespannten Filtermedium (22) mit Abstand umgibt und wobei der Anschlag (40) in dem Gehäuse vorgesehen ist.

12. Filtervorrichtung nach Anspruch 11, **dadurch gekennzeichnet, dass** der Bereich zwischen Halterung (24) und Gehäuse (16) staubdicht ist, wobei vorzugsweise zwischen Halterung (24) und Gehäuse (16) eine flexible, staubdichte Dichtung vorgesehen ist.

13. Filtervorrichtung nach einem der vorhergehenden Ansprüche, **dadurch gekennzeichnet, dass** das Filtermedium (22) aus einem gewirkten Material gebildet ist.

14. Fahrzeug umfassend eine Filtervorrichtung (12) nach einem der Ansprüche 1 bis 13.

15. Fahrzeug nach einem der Ansprüche 13 oder 14, **dadurch gekennzeichnet, dass** das Fahrzeug einen Betriebszustand aufweist, in dem das Fahrzeug bestimmungsgemäß betrieben wird und dass in dem Betriebszustand die Halterung gegenüber dem Bauteil beweglich ist.
